# EUROPEAN PATENT SPECIFICATION

(11) **EP 1 499 943 B1**
(45) Date of publication and mention of the grant of the patent: **20.04.2011**
(21) Application number: 02757648.7
(22) Date of filing: 04.09.2002
(51) Int. Cl.: G06F 1/32

(54) **A METHOD AND APPARATUS TO PROVIDE A USER PRIORITY MODE**
VERFAHREN UND VORRICHTUNG ZUR BEREITSTELLUNG EINES BENUTZERPRIORITÄTSMODUS
PROCEDE ET DISPOSITIF DONNANT UN MODE DE PRIORITE D'UTILISATEUR

(30) Priority: 25.09.2001 US 965283
(43) Date of publication of application: 26.01.2005
(73) Proprietor: Intel Corporation, Santa Clara, CA 95052 (US)
(72) Inventor: STANLEY, Randy, Aptos, CA 95003 (US)
(74) Representative: Goddar, Heinz J.
(86) International application number: PCT/US2002/028537
(87) International publication number: WO 2003/027818

(56) References cited:
- EP-A- 0 708 398
- US-A- 5 396 635
- US-A- 6 076 171

## Description

### FIELD OF THE INVENTION

This invention generally relates to a resource allocation enhancement to the system power management mechanism. More particularly this invention relates to shifting to high state of performance in response to a prioritized event.

### BACKGROUND OF THE INVENTION

Designers attempt to reduce the power consumed by a computer system, especially, in the arena of mobile electronic devices. Mobile electronic devices include battery operated computer systems such as, for example, notebook computers, subnotebook computers, and personal data assistants. By reducing the power consumed by these and other battery operated devices, a user can enjoy extended use and operation of the system between battery charges. Therefore, primarily considering the advantages to be gained by battery operated computer systems, system manufacturers have invested considerable resources into researching and developing technologies to aid in the reduction of power consumed by processors within these mobile electronic devices.

The power consumed by a processor, such as a central processing unit (CPU), is known to be approximately proportional to the square of the voltage supplied to the processor times the frequency at which the processor operates P ~(V² x f). Given this relationship, it can be seen that reducing the frequency or the voltage will result in a reduction of the power consumed by the processor. However, reducing the frequency at which the processor operates decreases the rate at which the processor may process data. Thus, a reduction in the frequency at which the processor operates decreases the power consumed by the processor as well as the state of performance of the processor.

Typically, CPU power management systems use an algorithm to control the performance state of the processor. The algorithm balances reducing power consumption by the processor with the processing demands on the processor. Generally, the algorithm creates some time lag or impediment prior to transiting the processor to the maximum performance state of the processor.

For example, the algorithm may be programmed to spread the processing workload of the processor across three time frames rather than increase the processing rate to complete the majority of the processing load in one time frame and under utilize the capacity of the processor in the next two time frames.

Typically, modern mobile CPU power management systems transition to higher performance states based upon a brief history of the CPU utilization. The history of CPU utilization is usually defined by a small finite window of time ending with the present. Typical mobile systems spend a significant portion of time in the idle state of performance causing even the most processing intensive tasks to generally incur a delay to the maximum performance state for a portion of a time window. Essentially, the finite window of time acts as a weighted average to impede the transition of the processor to the highest state of performance.

For example, at the beginning of the processing intensive task ninety percent of the finite window of time is filled with the CPU being used at 70% of capacity due to the processor being in the idle state of performance during that time frame and ten percent of the finite window of time is filled with the CPU being used at 100% of capacity due to demand of the processing intensive task on the processor. Thus, the algorithm determines the average percent utilization of the processor during this entire finite window of time to be 73% of capacity rather than its current utilization of 100% of capacity. The algorithm calculates ninety percent of the finite window of time multiplied by 70% utilization plus ten percent of the finite window of time multiplied by 100% utilization to equal 73% utilization. For example, an additional 40% of the window time will need to transpire to initiate a transition to the next higher performance state if the trip point were set to 85%. Perhaps by the next finite window of time the % utilization of the processor will reflect its current 100% demand and the algorithm will increase the state of performance of the processor.
US 5,396,635 discloses a power-conservation system in a computer system which includes a processing unit operating under control of an operating system. The computer system generates distinct call functions to the operating system where each call function is either in an active class or an idle class. The power conservation system has a plurality of states of operation including an ON state, a DOZE state, a SLEEP state and an OFF state. An activity monitor monitors the activity of the computer system and generates control signals for selecting one of the states of operation for the computer system. The activity monitor includes a storage for storing a call value for each distinct call function and activity threshold values for the various states of operation. The call values are weighted for the call functions whereby different call functions have a greater or lesser impact on the value of an activity level. The call value for each call function is retrieved when the call function is made to the operating system. The retrieved call values are sequentially accumulated to form an activity value which indicates the activity level of the computer system. A comparator compares the activity value with the threshold values and in response to the comparison generates a control signal to a power controller which selects the states operation for the computer system, thereby regulating the power consumption of the computer system based on the activity of the computer system.

### BRIEF DESCRIPTION OF THE DRAWINGS

The drawings refer to the invention in which:

figure 1 is a block diagram of an exemplary multiple performance state computer system that may be used in conjunction with transitioning an integrated circuit from a first performance state to the higher performance state upon detecting a user event;

figure 2 illustrates a graph of various performance states of one embodiment of an integrated circuit having multiple performance states;

figure 3 illustrates a graph of various performance states of one embodiment of an integrated circuit having multiple performance states including the performance state of operating at a higher state of performance for a transient period of time; and

figure 4 illustrates a flow diagram of one embodiment of the algorithm to transition the state of performance of the integrated circuit.

While the invention is subject to various modifications and alternative forms, specific embodiments thereof have been shown by way of example in the drawings and will herein be described in detail. The invention should be understood to not be limited to the particular forms disclosed, but on the contrary, the intention is to cover all modifications, equivalents, and alternatives falling within the scope of the appended claims.

### DETAILED DISCUSSION

In the following description, numerous specific details are set forth, such as examples of specific data signals, named component blocks, levels of performance, storage and operating locations of an algorithm, etc., in order to provide a thorough understanding of the present invention. It will be apparent, however, to one skilled in the art that the present invention may be practiced without these specific details. In other instances, well known components or methods have not been described in detail but rather in a block diagram in order to avoid unnecessarily obscuring the present invention. Thus, the specific details set forth are merely exemplary. The specific details may be varied from and still be contemplated to be within the scope of the appended claims. The term coupled is defined as meaning connected either directly or indirectly.

In general, a method, apparatus and system are described which allow a user event to trigger a direct transition of an integrated circuit from a first performance state to a higher performance state. In one embodiment, the first performance state being a first voltage level supplied to a processor and a first clock frequency of operation for that processor or other similar integrated circuit in a computer system. In one embodiment, the higher performance state being a second higher voltage level supplied to the processor and a second higher clock frequency of operation for that processor. In one embodiment, the higher performance state adds a second processor to manage the processing load. In one embodiment, lowering the clock frequency and/or voltage level of the processor reduces the power consumed by the processor. In one embodiment, a power management algorithm controls the clock frequency and voltage supplied to the processor.

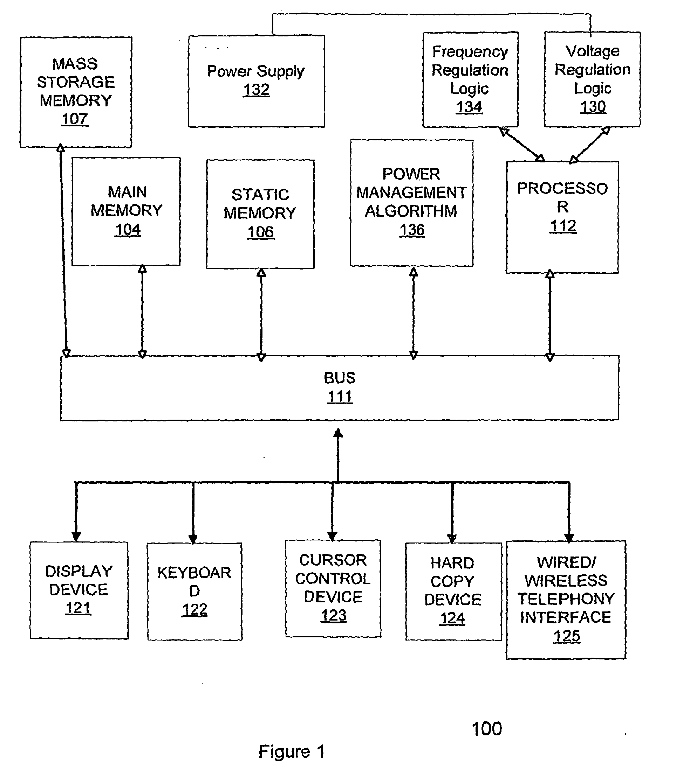

Figure 1 is a block diagram of an exemplary multiple performance state computer system that may be used in conjunction with transitioning an integrated circuit from a first performance state to the higher performance state upon detecting a user event. In one embodiment, computer system **100** comprises a communication mechanism or bus **111** for communicating information, and an integrated circuit component such as a processor **112** coupled with bus **111** for processing information. Processor **112** may include a microprocessor, but is not limited to a microprocessor, such as a Pentium^{™}, PowerPC^{™}, Alpha^{™}, etc.

Computer system **100** further comprises a random access memory (RAM), or other dynamic storage device **104** (referred to as main memory) coupled to bus **111** for storing information and instructions to be executed by processor **112**. Main memory **104** also may be used for storing temporary variables or other intermediate information during execution of instructions by processor **112**.

Computer system **100** also comprises a read only memory (ROM) and/or other static storage device **106** coupled to bus **111** for storing static information and instructions for processor **112,** and a mass storage memory **107**, such as a magnetic disk or optical disk and its corresponding disk drive. Mass storage memory **107** is coupled to bus **111** for storing information and instructions.

Computer system **100** may further be coupled to a display device **121**, such as a cathode ray tube (CRT) or liquid crystal display (LCD), coupled to bus **111** for displaying information to a computer user. An alphanumeric input device (keyboard) **122**, including alphanumeric and other keys, may also be coupled to bus **111** for communicating information and command selections to processor **112**. An additional user input device is cursor control device **123**, such as a mouse, trackball, trackpad, stylus, or cursor direction keys, coupled to bus **111** for communicating direction information and command selections to processor **112**, and for controlling cursor movement on a display device **112**.

Another device that may be coupled to bus **111** is a hard copy device **124**, which may be used for printing instructions, data, or other information on a medium such as paper, film, or similar types of media. Furthermore, a sound recording and playback device, such as a speaker and/or microphone (not shown) may optionally be coupled to bus **111** for audio interfacing with computer system **100**. Another device that may be coupled to bus **111** is a wired/wireless communication capability **125** to communication to a phone.

In one embodiment, processor **112** uses the clock frequency supplied by frequency regulation logic **134** to coordinate the execution of instructions within the processor **112**. For one embodiment, frequency regulation logic **134** includes circuitry that doubles, triples or otherwise multiplies the clock frequency by an integer or rational value before sending the clock signal onto internal execution units of the processor **112.** For one embodiment, processor **112** itself includes circuitry that doubles, triples or otherwise multiplies the clock frequency by an integer or rational value before sending the clock signal onto internal execution units of the processor **112.** For example, the operating frequency of the processor **112** may be 250 megahertz at a low state of performance and even integer of eight times the initial frequency, or 2000 megahertz, at a higher state of performance. In one embodiment, the clock couples to and controls the frequency at which the processor **112** operates.

In one embodiment, processor **112** uses the voltage supplied by voltage regulator logic **130** to power its operation. Voltage regulator logic **130** couples to a power supply **132** such as a battery in a battery operated computer system and generates the supply voltage that is supplied to processor **112**. In one embodiment, the voltage regulator couples to the processor in order to determine the voltage at which the processor operates. For example, the voltage regulator logic may supply a 1.8 volts voltage level and a higher 3.3 volts voltage level.

In one embodiment, a power management algorithm **136**, in response to a particular predefined condition, such as a preset percent utilization of the processor, signals the frequency regulation logic **134** to lower the operating frequency supplied to the processor **112**. Thus, the predefined condition lowers the frequency at which the processor **112** operates. Once the frequency is reduced, the frequency regulation logic **134** communicates directly with the voltage regulator logic **130**, telling the voltage regulator logic **130** to lower the voltage supplied to the processor **112**. The voltage regulation logic **130** complies, and the processor **112** continues to operate in this lower power performance state, reducing the power drain on the power supply **130**.

In one embodiment, the power management algorithm **136,** in response to a particular prioritized event, such as detection of a user event, signals the frequency regulation logic **134** to raise the frequency to the higher operating frequency so that the processor can again operate at full speed. Before raising the frequency, however, the frequency regulation logic **134** communicates directly with the voltage regulation logic **130**, signaling the voltage regulation logic **130** to raise the supply voltage to the higher voltage level. The voltage regulation logic **134** responds to this request and upon completion directly communicates back to the frequency regulation logic **134** that the supply voltage has been raised. Upon receiving this information from the voltage regulation logic **130**, the frequency regulation logic **134** then raises the frequency back to the higher value in order to allow the processor **112** to operate at the higher performance state. In one embodiment, the power management algorithm **136** is split into two discreet algorithms. A first algorithm to decrease the transition of processor **112** from a higher state of performance to a lower state of performance and a second algorithm to transition processor **112** from a lower state of performance to a higher state of performance.

Note, various other configurations and implementations in accordance with alternate embodiments of the present invention may exist.

For example, in one embodiment, processor **112** may be a single processor capable of operating with variable operating frequencies and voltage levels. In one embodiment, processor **112** may be two or more processors working in conjunction to respond to the processing load. In one embodiment, processor **112** may be a chipset having multiple performance modes.

For example, the power management algorithm **136** may be software based or hardware based such as arbitration logic may be shared between the processors or a combination of software based and hardware based.

For example, in one embodiment" the power management algorithm **136** detects a user event. Upon detecting the user event, the power management algorithm **136** triggers the multiple performance state computer system **100** to transition to a higher performance state. The processor **112** has multiple states of performance including a first state of performance, a second state of performance higher than the first state of performance, and a third state of performance higher than the second state of performance. The algorithm directly transitions the processor **112** from the first state of performance to the third state of performance based upon detecting the user event. Note, the third state of performance may or may not be the maximum state of performance that the processor **112** can achieve.

For example, in one embodiment, a prioritized event may be a direct request for the highest performance state directly or indirectly by initiating or simulating a benign user event by an application is aware of the power management algorithm **136**.

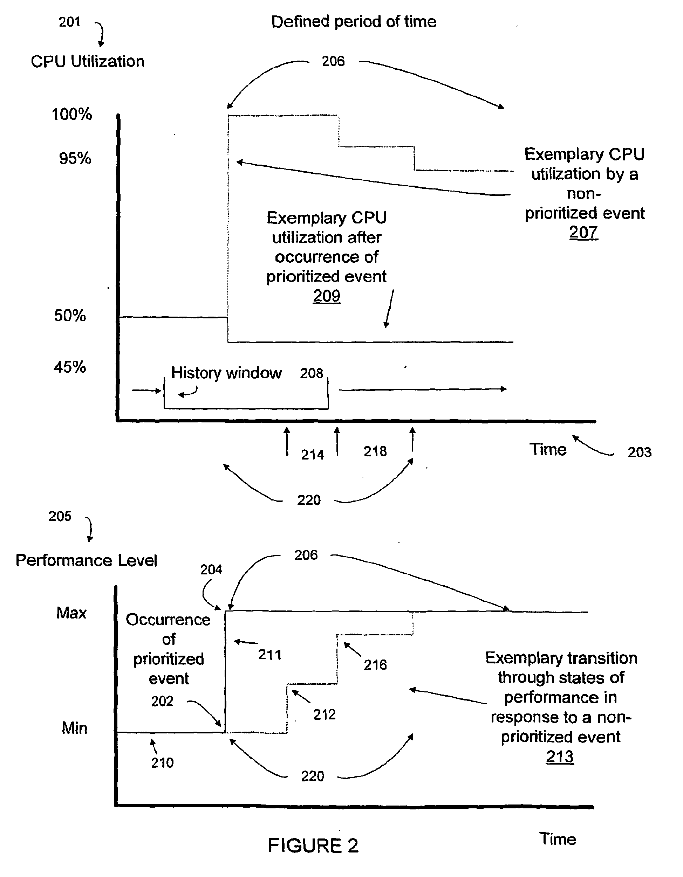

Figure 2 illustrates a graph of various performance states of one embodiment of an integrated circuit having multiple performance states. The top graph illustrates the average percent CPU utilization **201** over time **203** for both in response to the occurrence of a prioritized event **207** and in response to the occurrence of non-prioritized events **209**. The bottom graph illustrates performance level of the processor **205** over the same timeline for both in response to the occurrence of a prioritized event **211** and in response to the occurrence of non-prioritized events **213**. The dotted line represents an exemplary average percent CPU utilization by non-prioritized events **209** and the performance level transitions in response to those non-prioritized events **213**. The solid line represents an exemplary average percent CPU utilization by a prioritized event **207** and the performance level transition in response to the prioritized event **211**. The algorithm to control the performance state of the processor may prioritize certain events such as user events, so that the occurrence of the prioritized event 202 may trigger instant access to a higher performance state in a multiple performance state integrated circuit, such as a processor. In an embodiment, the direct transition is to the highest performance state **204** in response to a prioritized event **202**.

In one embodiment, in response to a trigger to transition to a higher state of performance initiated by a non-prioritized event, the algorithm to control the performance state of the processor utilizes real-time historical data of CPU utilization over a window of time (History window **208**), such as the past one hundred microseconds, to determine a transition to, or from, the next higher performance state. In contrast, the algorithm to control the performance state of the processor immediately enables a higher performance state such as the highest state of performance **204,** for a defined period of time **206,** when a prioritized event **202** such as a user event, is triggered. The duration of the defined period of time 206 may include considerations such as whether that higher performance state would be sustainable or transitory.

As noted, the algorithm to control the performance state of the processor impedes the transition to the next higher performance state for a time, in response to the occurrence of non-prioritized events such as software-initiated events. In one embodiment, the algorithm to control the performance state of the processor uses a requirement that the average percent utilization of the CPU **201** within the finite time period of the History Window **208** be greater than a predetermined setting. When the average percent utilization of the CPU **201** within the time period of the History Window **208** is greater than a predetermined setting, such as a setting of 85% usage, then the algorithm to control the performance state of the processor incrementally transitions the processor to faster states of performance.

For example, after exceeding the trigger amount set for the average percent utilization of the CPU, the algorithm may transition the processor from a minimum state of performance such as a sleep state of performance **210** to a next higher state, the idle state of performance **212**. A first brief time period **214** passes and the algorithm checks the CPU utilization **201** within the time period of the History Window **206**. The history window **208** representing a recordation of the most recent finite span of time along the timeline, such as the last one hundred microseconds, reflects a higher average percent CPU utilization **201**. The average percent CPU utilization **201** will have changed because the demand for the greater CPU utilization **201** has been in the examination time frame of the history window **206** for a greater percentage of the time and because the CPU itself has been performing at a higher processing or performance state for a portion of the examination time frame of the history window **206**.

Note, in one embodiment, the sleep state is the lowest state of performance, the idle state is the next higher state of performance, the active state is the second from the highest state of performance, and the higher state of performance is the highest state of performance. Four states of performance are described in this example. However, two or more states of performance may exist in any embodiment.

When the preset average percent utilization of the CPU still exceeds the preset threshold such as 95%, then the algorithm transitions the processor from the idle state of performance **212** to next higher state, such as the active state of performance **216.** A second brief time period **218** passes and the algorithm checks the CPU utilization within the time period of the History Window **206**.

However, if the preset average percent utilization of the CPU still exceeds the trigger threshold, then the algorithm may transition the processor from the active state of performance **216** to next higher state, such as the highest state of performance **204.** Thus, in this example, a third time period **220** equal to all of the transition time periods elapses before the processor transitions into the highest performance state **204**. The algorithm may use this incremental increase in processing power over time to balance a demand for increased performance and an attempt to reduce the power drain on the power supply.

Note, even if the demand for CPU utilization increases to one hundred percent instantly, the trigger threshold such as 95% average percent CPU utilization may not be exceeded until the average over the entire span of the finite time period in the History Window **206** equals or exceeds 95%. Thus, a time weighted delay occurs before the algorithm triggers a transition of the processor to a higher state.

In contrast, when a prioritized event **202** such as a user event, is triggered, then the algorithm immediately transitions the processor to a higher state of performance such as active state of performance **216** or highest state of performance **204**. The detection of the prioritized event **202** forces the algorithm to immediate transition to a higher performance state bypassing the level of performance immediately higher than the current level of performance. In an embodiment, how many levels of performance the algorithm bypasses over is dependant on conditions such as thermal considerations and available battery power. In an embodiment, if the processor only has two levels of performance, than the algorithm transitions the processor to the highest level of performance. Note, for this embodiment, the computational overhead of the % CPU utilization determination may be averted.

When the processor transitions to the higher state of performance in response to the priority event, the actual average percent CPU utilization may decrease because the processing load may not have increased but the performance capacity of the processor increased. For example, the processor may be operating at 50% CPU utilization **201** prior to the occurrence of a prioritized event **202**. The algorithm may transition the processor to the highest level of performance **204**. However, the processing load may not increased thus decreasing the actual percent CPU utilization **201** from, for example 50% to 48% CPU utilization **201**. In one embodiment, a more rapid transition for prioritized events occurs since they are asynchronous and often happen when the system is "ready" for more work (idle.)

In one embodiment, a user may increase the processing time for software-initiated events. For instance, an Excel chart and graph would likely compute and re-graph more quickly as a result of a user depressing a key on the keyboard. The occurrence of the user event causes the algorithm to immediately transition to higher levels of performance irrespective of the actual average percent CPU utilization. Thus in one embodiment, even during a software initiated processing task, such as the calculation for the Excel spreadsheet, the user may increase the processing rate of those equations by simply depressing a key.

The computing system can be made aware of user events, such as keystrokes, mouse movement, joystick inputs, mouse clicks, human commands via microphone, etc. In one embodiment, the programming environment within which the processor is operating defines the user event. In this embodiment, the operating environment may define what event constitutes a user event and how to detect that event.

In one embodiment, the algorithm to control the performance state of the processor may reside in the operating software. In one embodiment, the algorithm to control the performance state of the processor may reside in the **B**asic **I**nput **O**utput System (BIOS). The BIOS can be an essential set of routines in a personal computer, which is stored on a chip and provides an interface between the operating system and the hardware of the computer. In this embodiment, depending on the programming language and system architecture, the BIOS may be directly aware that a user event has occurred or may receive a notification, for example, from the operating system that a user event has just occurred. In one embodiment, the algorithm to control the performance state of the processor may reside as an application program, an executable program module, or other similar program. In this embodiment, the application program, an executable program module, or other similar program may directly detect when a prioritized event such as a user event occurs or receive a notification from the operating system that the prioritized event occurred.

In one embodiment, the threshold to trigger a transition in non-prioritized events may be a specific average percent utilization of the CPU, such as 85%, transitions based upon the idle vs. active ratio, or any other similar predefined threshold.

In one embodiment, the algorithm controlling the performance state of the processor may be split into two discrete algorithms. A first algorithm to control transitioning to a higher performance state. Likewise, a second algorithm to control transitioning to a lower performance state. In one embodiment, the processor may perform at the higher performance state for an extended sustainable period of time. In this embodiment, the highest performance state in combination with the heat dissipation capacity of the system is such that either extended performance will not thermally damage any component within the system or provisions for an override mode are implemented. In one embodiment, the processor may perform at the higher performance state for a momentary or transitory period of time due to thermal considerations.

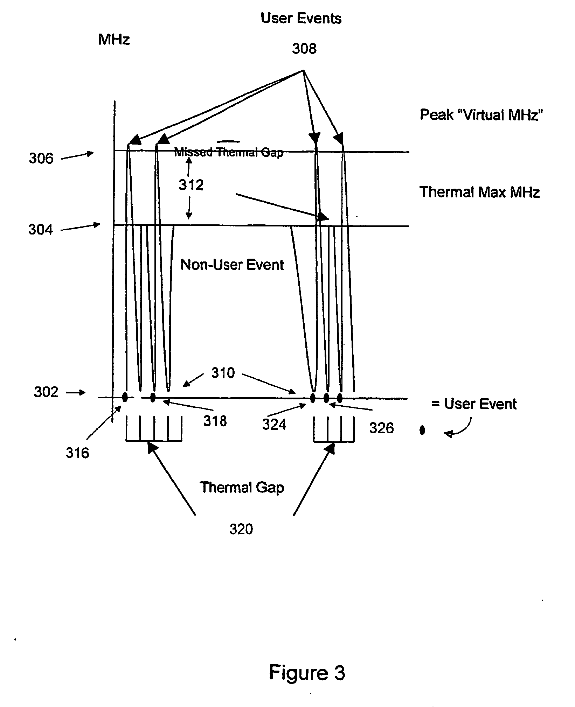

Figure 3 illustrates a graph of various performance states of one embodiment of an integrated circuit having multiple performance states including the performance state of operating at a higher state of performance for a transient period of time. In one embodiment, the higher performance state of the processor may not be sustained for extended periods of time without potentially causing a failure in the system due to overheating a component. The graph illustrates the operational frequency of the processor over time. Three performance states are shown, such as at 500 MHz, the idle state of performance **302**, at 1000 MHz, the thermal maximum state of performance **304**, and at 2000 MHz, the actual highest state of performance **306** referred to as the peak virtual MHz. Multiple user events **308** occur during this time period on the graph as well as non-user events **310**.

Processing requests initiated by a non-user event **310**, such as application program, may only transition the processor to the thermal higher state of performance **304**. The processor and other system components may operate at the thermal maximum state of performance **304** for sustained periods of time without failure due to thermal considerations. A thermal guard band **312** exists between the actual higher state of performance **306** and the thermal maximum state of performance **304**. Prolonged operation at operating frequencies and voltages above the thermal maximum state of performance **304** could damage thermally sensitive components such as integrated components.

However, the occurrence or repetition of user events **308** occurs very slowly in respect to processing time. Many hundreds or thousands of non-user event processing requests **310** may be responded to by a processor in the time frame it takes for a user to depress a first key and then a second key. Usually, a large relative lag time exists between a first user event **316** and a second user event **318**. The large time lag in between user events **308** generally allows the heat dissipation capacity of the computing system to remove the extra heat generated by transitioning to the actual maximum state of performance **306** in response to the first user event **316** prior to the processor transitioning again to the actual maximum state of performance **306** in response to the second user event **318.**

However, some design safety precautions can be added. In one embodiment, the transition to the actual maximum state of performance **306** is for a transitory period that ensures no component failures will occur due to thermal considerations. Further, after the processor transitions to the actual maximum performance state **306**, then predefined periods of time inhibiting transition to actual maximum performance state **306** occur such as thermal gaps **320**. If a user event, such as mouse click **326**, occurs during a thermal gap period **320**, then the algorithm transitions the processor to the thermal maximum performance state **304**. For example, if two user events such as a key stroke **324** and a mouse click **326** occur at virtually the same time, then the key stroke **324** transitions the processor to the actual maximum performance state **306** and the mouse click **326** occurring during a thermal gap **320** only triggers a transition to the thermal maximum performance state **304**. In one embodiment, the thermal gap periods **320** are spaced equal to the time delay observed between user events **308** generated by a fast user.

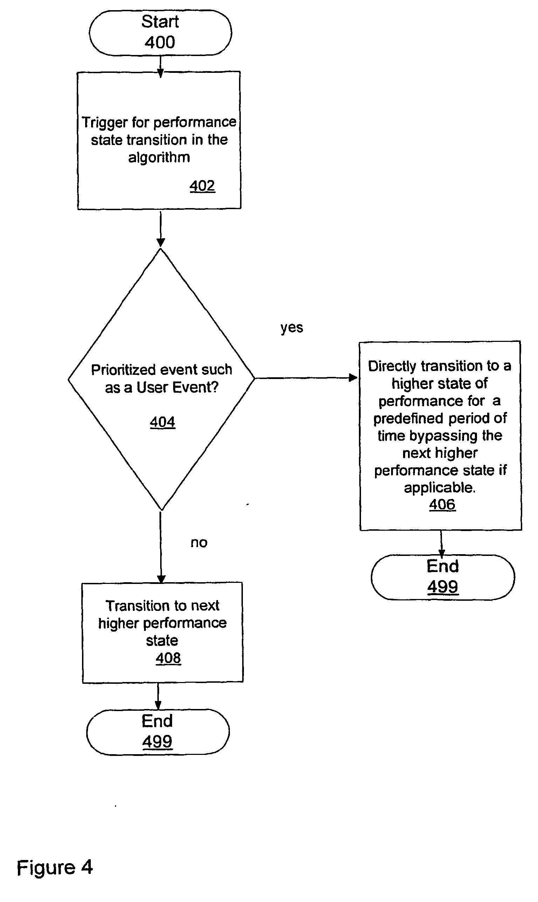

Figure 4 illustrates a flow diagram of one embodiment of the algorithm to transition the state of performance of the integrated circuit. In one embodiment, a program embedded in a computer readable medium performs the following steps.

In block **402,** the algorithm detects a trigger to transition the integrated circuit, such as a processor, to a higher state of performance. The trigger may be detection of a prioritized event such as a user event or similar event. The trigger may also be a preset threshold such as an average percent utilization of the CPU. If the trigger is a non-prioritized event a delay in responding to the trigger may exist to balance processor performance versus power consumption considerations.

In block **404**, the algorithm determines whether the processing event is a prioritized event such as a user event, to cause the algorithm to immediately transition the processor to a higher state of performance.

In block **406**, if the algorithm determines the processing event is a prioritized event, then the algorithm immediately transitions the processor to a higher state of performance for a predefined period of time bypassing over the next higher state of performance, if applicable. Thus, if a first state of performance, a second state of performance higher than the first state of performance, a third state of performance higher than the second state of performance, and a fourth state of performance higher than the third state of performance exist, then the algorithm may transition to either the third state or fourth state in order to give the user a potential dramatic increase in performance. In an embodiment, if only two performance states exist, then the algorithm transitions the processor to the highest state of performance. In an embodiment, if two or more performance states exist, then the algorithm transitions the processor to the highest state of performance. In an embodiment, after the predefined period of time expires, then the power management algorithm based upon CPU utilization transitions the processor to the appropriate state of performance.

In one embodiment, the highest state of performance is sustainable for a prolonged period of time based upon thermal considerations to operate at the highest state of performance without a failure. In one embodiment, the highest state of performance is sustainable for a momentary period of time based upon thermal considerations to operate at the highest state of performance without a failure.

In block **408**, if the algorithm determines the processing event is not a prioritized event, then the algorithm transitions the processor the next higher performance state.

In one embodiment, the software used to facilitate the algorithm can be embodied onto a machine-readable medium. A machine-readable medium includes any mechanism that provides (e.g., stores and/or transmits) information in a form readable by a machine (e.g., a computer). For example, a machine-readable medium includes read only memory (ROM); random access memory (RAM); magnetic disk storage media; optical storage media; flash memory devices; DVD's, electrical, optical, acoustical or other form of propagated signals (e.g., carrier waves, infrared signals, digital signals, EPROMs, EEPROMs, FLASH, magnetic or optical cards, or any type of media suitable for storing electronic instructions. Slower mediums could be cached to a faster, more practical, medium.

Some portions of the detailed descriptions above are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the above discussions, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers, or other such information storage, transmission or display devices.

While some specific embodiments of the invention have been shown the invention is not to be limited to these embodiments. For example, most functions performed by electronic hardware components may be duplicated by software emulation. Thus, a software program could issue a command to mimic a user event command code. The algorithm detecting a user event command, even though an actual user event has not occurred, directly transitions the processor to a higher state of performance. In an embodiment, a prioritize event may be a software command issued to invoke the direct transition the processor to a higher state of performance. The invention is to be understood as not limited by the specific embodiments described herein, but only by scope of the appended claims.

## Claims

1. A method, comprising:
detecting (402) an event to transition an integrated circuit of a computing system to a higher state of performance, the integrated circuit having multiple states of performance including a first state of performance, a second state of performance higher than
the first state of performance, and a third state of performance higher than the second state of performance, the computing system having a power supply which includes a battery;
determining (404) whether the event is a user-initiated event or a software-initiated event;
if the event is a user-initiated event directly transitioning (406) the integrated circuit from the first state of performance to the third state of performance if the event is a software-initiated event transitioning (408) the integrated circuit from the first state of performance to the second state of performance.

2. The method of claim 1, wherein the user event is defined by a programming environment within which the computing system is operating.

3. The method of claim 1, wherein directly transitioning comprises transitioning without delay.

4. The method of claim 1, further comprising:
operating the integrated circuit at the third state of performance for a predefined period of time based upon thermal considerations to operate at the third state of performance without failure.

5. The method of claim 4, wherein the computing system comprises a laptop computer.

6. The method of claim 1, wherein the computing system comprises a personal digital assistant.

7. An apparatus, comprising:
means (136) for detecting a user-initiated event or a software-initiated event in a computing system;
the computing system including an integrated circuit (112) having multiple states of performance including a first state of performance, a second state of performance higher than the first state of performance, and a third state of performance higher than the second state of performance;
means for determining whether a detected event is a user-initiated event or a software-initiated event; and
means (130, 134) for directly transitioning the integrated circuit from the first state of performance to the third state of performance based upon detecting that the event is a user-initiated event or for transitioning the integrated circuit from the first state of performance to the second state of performance based upon detecting that the event is a software-initiated event.

8. The apparatus of claim 7, further comprising:
means (134) for changing an operating frequency of the integrated circuit (112) to change the state of performance of the integrated circuit.

9. The apparatus of claim 7, further comprising:
means (130) for changing an operating voltage level of the integrated circuit (112) to change the state of performance of the integrated circuit.

10. The apparatus of one of claims 7 to 9, comprising:
a computer readable medium;
and
a program stored in the computer readable medium to manage power consumption within the first integrated circuit, instructions associated with the program to directly transition the first integrated circuit (112) from the first state of performance to the third state of performance based upon detecting a user event.

11. The apparatus of claim 10, wherein the first state of performance comprises a first voltage level and a first operating frequency.

12. The apparatus of claim 10, wherein the third state of performance comprises a second integrated circuit co-processing instructions with the first integrated circuit.

13. The apparatus of claim 10, further comprising:
frequency regulation logic to change an operating frequency of the first integrated circuit, the frequency regulation logic to receive a signal from the program.

14. The apparatus of claim 10, further comprising:
voltage regulation logic to change an operating voltage of the first integrated circuit, the voltage regulation logic to receive a signal from the program.

15. The apparatus of claim 10, wherein the instructions reside in a Basic Input Output System.

16. The apparatus of claim 10, wherein the instructions reside in an operating system.

17. The apparatus of claim 10, wherein the instructions reside in application software.

18. The apparatus of claim 10, wherein the first integrated circuit comprises a chip set.

19. The apparatus of claim 10, wherein the first integrated circuit comprises a processing unit.

20. The apparatus of claim 15, wherein the Basic Input Output System to receive a notification signal from an operating system that the user event has occurred.

21. The apparatus of claim 14, wherein the program comprises an increasing state transition algorithm discrete from a decreasing state transition algorithm.

22. The apparatus of claim 10, wherein the program to transition the first integrated circuit to a next higher state of performance based upon an occurrence of a non-user event increases utilization of the first integrated circuit over a preset threshold.

23. A machine-readable medium that provides instructions, which when executed by a machine, cause the machine to perform operations comprising:
detecting (402) an event to transition an integrated circuit of a computing system to a higher state of performance, the integrated circuit having multiple states of performance including a first state of performance, a second state of performance higher than the first state of performance, and a third state of performance higher than the second state of performance; and
determining (404) whether the event is a user-initiated event or a software-initiated event;
if the event is a user-initiated event directly transitioning (406) the integrated circuit from the first state of performance to the third state of performance based upon detecting the user event,
if the event is a software-initiated event transitioning (408) the integrated circuit from the first state of performance to the second state of performance.

24. The machine-readable medium of claim 23, further comprising instructions which, when executed by the machine, cause the machine to perform the further operations comprising:
changing an operating frequency of the integrated circuit to change the state of performance of the integrated circuit.

25. The machine-readable medium of claim 23, further comprising instructions which, when executed by the machine, cause the machine to perform the further operations comprising:
changing an operating voltage level of the integrated circuit to change the state of performance of the integrated circuit.

26. The machine-readable medium of claim 23, further comprising instructions which, when executed by the machine, cause the machine to perform the further operations comprising:
operating the integrated circuit at the third state of performance for a transient period of time.

27. The machine-readable medium of one of claims 23 to 26, further comprising instructions which, when executed by the machine, cause the machine to perform the further operations comprising:
changing the state of performance of the integrated circuit by changing an amount of processors to manage the processing load.

## Patentansprüche

1. Verfahren, umfassend:
Detektieren (402) eines Ereignisses, um eine integrierte Schaltung eines Computersystems in einen höheren Performance-Zustand zu versetzen, wobei die integrierte Schaltung mehrere Performance-Zustände aufweist einschließlich eines ersten Performance-Zustandes, eines zweiten Performance-Zustands, der höher als der erste Performance-Zustand ist, und eines dritten Performance-Zustandes, der höher als der zweite Performance-Zustand ist, wobei das Computersystem eine Energieversorgung aufweist, die eine Batterie beinhaltet;
Bestimmen (404), ob das Ereignis ein vom Benutzer eingeleitetes Ereignis oder ein von Software eingeleitetes Ereignis ist;
wenn das Ereignis ein vom Benutzer eingeleitetes Ereignis ist, direktes Versetzen (406) der integrierten Schaltung aus dem ersten Performance-Zustand in den dritten Performance-Zustand,
wenn das Ereignis ein von Software eingeleitetes Ereignis ist, Versetzen (408) der integrierten Schaltung aus dem ersten Performance-Zustand in den zweiten Performance-Zustand.

2. Verfahren nach Anspruch 1, wobei das Benutzerereignis durch eine Programmierumgebung definiert ist, innerhalb welcher das Computersystem betrieben wird.

3. Verfahren nach Anspruch 1, wobei direktes Versetzen das Versetzen ohne Verzögerung ist.

4. Verfahren nach Anspruch 1, ferner umfassend:
Betreiben der integrierten Schaltung in einem dritten Performance-Zustand für einen vorherbestimmten Zeitrum auf Basis von thermischen Überlegungen, um in einem dritten Performance-Zustand ausfallfrei funktionieren.

5. Verfahren nach Anspruch 4, wobei das Computersystem ein Laptop-Computer ist.

6. Verfahren nach Anspruch 1, wobei das Computersystem ein persönlicher digitaler Assistent ist.

7. Vorrichtung, umfassend:
Mittel (136) zum Detektieren eines vom Benutzer eingeleitetes Ereignisses oder eines von Software eingeleitetes Ereignisses in einem Computersystem;
wobei das Computersystem eine integrierte Schaltung (112) mit mehreren Performance-Zuständen beinhaltet einschließlich eines ersten Performance-Zustandes, eines zweiten Performance-Zustands, der höher als der erste Performance-Zustand ist, und eines dritten Performance-Zustandes, der höher als der zweite Performance-Zustand ist;
Mittel zum Bestimmen, ob ein detektiertes Ereignis ein vom Benutzer eingeleitetes Ereignis oder ein von Software eingeleitetes Ereignis ist; und
Mittel (130, 134) zum direkten Versetzen des integrierten Schaltung aus dem ersten Performance-Zustand in den dritten Performance-Zustand auf Basis des Detektierens, dass das Ereignis ein vom Benutzer eingeleitetes Ereignis ist, oder zum Versetzen der integrierten Schaltung aus dem ersten Performance-Zustand in den zweiten Performance-Zustand auf Basis des Detektierens, dass das Ereignis ein von Software eingeleitetes Ereignis ist.

8. Vorrichtung nach Anspruch 7, ferner umfassend:
Mittel (134) zum Ändern der Betriebsfrequenz der integrierten Schaltung (112), um den Performance-Zustand der integrierten Schaltung zu ändern.

9. Vorrichtung nach Anspruch 7, ferner umfassend:
Mittel (130) zum Ändern des Betriebsspannungspegels der integrierten Schaltung (112), um den Performance-Zustand der integrierten Schaltung zu ändern.

10. Vorrichtung nach einem der Ansprüche 7 bis 9, umfassend:
ein computerlesbares Medium; und
ein im computerlesbaren Medium gespeichertes Programm zum Managen des Energieverbrauchs innerhalb der integrierten Schaltung, dem Programm zugeordnete Anweisungen zum direkten Versetzen der ersten integrierten Schaltung (112) aus dem ersten Performance-Zustand in den dritten Performance-Zustand auf Basis des Detektierens eines Benutzerereignisses.

11. Vorrichtung nach Anspruch 10, wobei der erste Performance-Zustand einen ersten Spannungspegel und eine erste Betriebsfrequenz umfasst.

12. Vorrichtung nach Anspruch 10, wobei der dritte Performance-Zustand eine zweite integrierte Schaltung umfasst, die zusammen mit der ersten integrierten Schaltung Anweisungen verarbeitet.

13. Vorrichtung nach Anspruch 10, ferner umfassend:
Frequenzregelungslogik zum Ändern einer Betriebsfrequenz der ersten integrierten Schaltung, wobei die Frequenzregelungslogik ein Signal vom Programm empfängt.

14. Vorrichtung nach Anspruch 10, ferner umfassend:
Spannungsregelungslogik zum Ändern einer Betriebsspannung der ersten integrierten Schaltung, wobei die Spannungsregelungslogik ein Signal vom Programm empfängt.

15. Vorrichtung nach Anspruch 10, wobei die Anweisungen in einem Basisdatenaustauschsystem (BIOS) residieren.

16. Vorrichtung nach Anspruch 10, wobei die Anweisungen in einem Betriebssystem residieren.

17. Vorrichtung nach Anspruch 10, wobei die Anweisungen in Anwendungssoftware residieren.

18. Vorrichtung nach Anspruch 10, wobei die erste integrierte Schaltung ein Chipset umfasst.

19. Vorrichtung nach Anspruch 10, wobei die erste integrierte Schaltung eine Verarbeitungseinheit umfasst.

20. Vorrichtung nach Anspruch 15, wobei das Basisdatenaustauschsystem (BIOS) ein Benachrichtigungssignal von einem Betriebssystem empfängt dahin gehend, dass das Benutzerereignis eingetreten ist.

21. Vorrichtung nach Anspruch 14, wobei das Programm einen Algorithmus für einen steigenden Zustandsübergang umfasst, der separat von einem Algorithmus für einen fallenden Zustandsübergang ist.

22. Vorrichtung nach Anspruch 10, wobei das Programm zum Versetzen der ersten integrierten Schaltung in den nächsthöheren Performance-Zustand auf Basis eines Eintretens eines Nichtbenutzer-Ereignisses die Nutzung der ersten integrierten Schaltung über eine voreingestellte Schwelle hinaus erhöht.

23. Maschinenlesbares Medium, das Anweisungen bereitstellt, die bei Ausführung durch eine Maschine bewirken, dass die Maschine Operationen durchführt, umfassend:
Detektieren (402) eines Ereignisses, um eine integrierte Schaltung eines Computersystems in einen höheren Performance-Zustand zu versetzen, wobei die integrierte Schaltung mehrere Performance-Zustände aufweist einschließlich eines ersten Performance-Zustandes, eines zweiten Performance-Zustands, der höher als der erste Performance-Zustand ist, und eines dritten Performance-Zustandes, der höher als der zweite Performance-Zustand ist, und
Bestimmen (404), ob das Ereignis ein vom Benutzer eingeleitetes Ereignis oder ein von Software eingeleitetes Ereignis ist;
wenn das Ereignis ein vom Benutzer eingeleitetes Ereignis ist, direktes Versetzen (406) der integrierten Schaltung aus dem ersten Performance-Zustand in den dritten Performance-Zustand auf Basis des Detektierens des Benutzerereignisses,
wenn das Ereignis ein von Software eingeleitetes Ereignis ist, Versetzen (408) der integrierten Schaltung aus dem ersten Performance-Zustand in den zweiten Performance-Zustand.

24. Maschinenlesbares Medium nach Anspruch 23, ferner umfassend Anweisungen, die bei Ausführung durch die Maschine bewirken, dass die Maschine die weiteren Operationen durchführt, umfassend:
Ändern einer Betriebsfrequenz der integrierten Schaltung (112), um den Performance-Zustand der integrierten Schaltung zu ändern.

25. Maschinenlesbares Medium nach Anspruch 23, ferner umfassend Anweisungen, die bei Ausführung durch die Maschine bewirken, dass die Maschine die weiteren Operationen durchführt, umfassend:
Ändern eines Betriebsspannungspegels der integrierten Schaltung (112), um den Performance-Zustand der integrierten Schaltung zu ändern.

26. Maschinenlesbares Medium nach Anspruch 23, ferner umfassend Anweisungen, die bei Ausführung durch die Maschine bewirken, dass die Maschine die weiteren Operationen durchführt, umfassend:
Betreiben der integrierten Schaltung im dritten Performance-Zustand für einen vorübergehenden Zeitraum.

27. Maschinenlesbares Medium nach einem der Ansprüche 23 bis 26, ferner umfassend Anweisungen, die bei Ausführung durch die Maschine bewirken, dass die Maschine die weiteren Operationen durchführt, umfassend:
Ändern des Performance-Zustands der integrierten Schaltung durch Ändern der Anzahl von Prozessoren zum Managen der Verarbeitungslast.

## Revendications

1. Procédé comportant les étapes consistant à :
détecter (402) un événement pour faire passer un circuit intégré d'un système informatique à un état de performances plus élevé, le circuit intégré ayant de multiples états de performances incluant un premier état de performances, un deuxième état de performances supérieur au premier état de performances, et un troisième état de performances supérieur au deuxième état de performances, le système informatique ayant un bloc d'alimentation qui inclut une batterie,
déterminer (404) si l'événement est un événement déclenché par un utilisateur ou un événement déclenché par un logiciel,
si l'événement est un événement déclenché par un utilisateur, faire passer directement (406) le circuit intégré du premier état de performances au troisième état de performances,
si l'événement est un événement déclenché par un logiciel, faire passer (408) le circuit intégré du premier état de performances au deuxième état de performances.

2. Procédé selon la revendication 1, dans lequel l'événement déclenché par un utilisateur est défini par un environnement de programmation dans lequel le système informatique fonctionne.

3. Procédé selon la revendication 1, dans lequel le passage directement comporte un passage sans délai.

4. Procédé selon la revendication 1, comportant en outre l'étape consistant à :
faire fonctionner le circuit intégré au troisième état de performances pendant une période de temps prédéfinie sur la base de considérations thermiques afin de fonctionner au troisième état de performances sans défaillance.

5. Procédé selon la revendication 4, dans lequel le système informatique comporte un ordinateur portable.

6. Procédé selon la revendication 1, dans lequel le système informatique comporte un assistant numérique personnel.

7. Dispositif, comportant :
des moyens (136) pour détecter un événement déclenché par un utilisateur ou un événement déclenché par un logiciel dans un système informatique,
le système informatique incluant un circuit intégré (112) ayant de multiples états de performances incluant un premier état de performances, un deuxième état de performances supérieur au premier état de performances, et un troisième état de performances supérieur au deuxième état de performances,
des moyens pour déterminer si un événement détecté est un événement déclenché par un utilisateur ou un événement déclenché par un logiciel, et
des moyens (130, 134) pour faire passer directement le circuit intégré du premier état de performances au troisième état de performances sur la base de la détection que l'événement est un événement déclenché par un utilisateur ou pour faire passer le circuit intégré du premier état de performances au deuxième état de performances sur la base de la détection que l'événement est un événement déclenché par logiciel,

8. Dispositif selon la revendication 7, comportant en outre :
des moyens (134) pour changer une fréquence de fonctionnement du circuit intégré (112) afin de changer l'état de performances du circuit intégré.

9. Dispositif selon la revendication 7, comportant en outre :
des moyens (130) pour changer un niveau de tension de fonctionnement du circuit intégré (112) afin de changer l'état de performances du circuit intégré.

10. Dispositif selon l'une des revendications 7 à 9, comportant :
un support lisible par ordinateur, et
un programme mémorisé dans le support lisible par ordinateur pour gérer la consommation d'énergie dans le premier circuit intégré, des instructions associées au programme pour faire passer directement le premier circuit intégré (112) du premier état de performances au troisième état de performances sur la base de la détection d'un événement déclenché par un utilisateur.

11. Dispositif selon la revendication 10, dans lequel le premier état de performances comporte un premier niveau de tension et une première fréquence opérationnelle.

12. Dispositif selon la revendication 10, dans lequel le troisième état de performances comporte un second circuit intégré traitant conjointement des instructions avec le premier circuit intégré.

13. Dispositif selon la revendication 10, comportant en outre :
une logique de régulation de fréquence pour changer une fréquence de fonctionnement du premier circuit intégré, la logique de régulation de fréquence étant destinée à recevoir un signal en provenance du programme.

14. Dispositif selon la revendication 10, comportant en outre :
une logique de régulation de tension pour changer une tension de fonctionnement du premier circuit intégré, la logique de régulation de tension étant destinée à recevoir un signal en provenance du programme.

15. Dispositif selon la revendication 10, dans lequel les instructions résident dans un système de base d'entrée/sortie.

16. Dispositif selon la revendication 10, dans lequel les instructions résident dans un système d'exploitation.

17. Dispositif selon la revendication 10, dans lequel les instructions résident dans un logiciel d'application.

18. Dispositif selon la revendication 10, dans lequel le premier circuit intégré comporte un jeu de puces.

19. Dispositif selon la revendication 10, dans lequel le premier circuit intégré comporte une unité de traitement.

20. Dispositif selon la revendication 15, dans lequel le système de base d'entrée/sortie est destiné à recevoir un signal de notification en provenance d'un système d'exploitation indiquant que l'événement utilisateur est survenu.

21. Dispositif selon la revendication 14, dans lequel le programme comporte un algorithme de transition d'état croissant discret par rapport à un algorithme de transition d'état décroissant.

22. Dispositif selon la revendication 10, dans lequel le programme pour faire passer le premier circuit intégré à un état suivant plus élevé de performances sur la base de l'occurrence d'un événement n'étant pas déclenché par un utilisateur augmente l'utilisation du premier circuit intégré au-dessus d'un seuil prédéfini.

23. Support lisible par machine qui délivre des instructions, lesquelles lorsqu'elles sont exécutées par une machine, amènent la machine à exécuter des opérations comportant les étapes consistant à :
détecter (402) un événement pour faire passer un circuit intégré d'un système informatique à un état de performances plus élevé, le circuit intégré ayant de multiples états de performances incluant un premier état de performances, un deuxième état de performances supérieur au premier état de performances, et un troisième état de performances supérieur au deuxième état de performances, et,
déterminer (404) si l'événement est un événement déclenché par un utilisateur ou un événement déclenché par un logiciel,
si l'événement est un événement déclenché par un utilisateur, faire passer directement (406) le circuit intégré du premier état de performances au troisième état de performances sur la base de la détection de l'évènement utilisateur,
si l'événement est un événement déclenché par un logiciel, faire passer (408) le circuit intégré du premier état de performances au deuxième état de performances.

24. Support lisible par machine selon la revendication 23, comportant en outre des instructions, lesquelles, lorsqu'elles sont exécutées par la machine, amènent la machine à effectuer les opérations supplémentaires comportant de :
changer une fréquence de fonctionnement du circuit intégré afin de changer l'état de performances du circuit intégré.

25. Support lisible par machine selon la revendication 23, comportant en outre des instructions lesquelles, lorsqu'elles sont exécutées par la machine, amènent la machine à effectuer les opérations supplémentaires comportant de :
changer un niveau de tension de fonctionnement du circuit intégré afin de changer l'état de performances du circuit intégré.

26. Support lisible par machine selon la revendication 23, comportant en outre des instructions lesquelles, lorsqu'elles sont exécutées par la machine, amène la machine à exécuter les opérations supplémentaires comportant de :
mettre en fonctionnement le circuit intégré au troisième état de performances pendant une période de temps transitoire.

27. Support lisible par machine selon l'une quelconque des revendications 23 à 26, comportant en outre des instructions lesquelles, lorsqu'elles sont exécutées par la machine, amènent la machine à exécuter les opérations supplémentaires comportant de :
changer l'état de performances du circuit intégré en changeant une quantité de processeurs afin de gérer la charge de traitement.
